# EUROPEAN PATENT SPECIFICATION

(11) **EP 3 382 183 B1**
(45) Date of publication and mention of the grant of the patent: **13.05.2020**
(21) Application number: 18165485.6
(22) Date of filing: 03.04.2018
(51) Int. Cl.: F02C 7/32, F02C 7/36, F16H 37/08

(54) **ACCESSORY GEARBOXES**
HILFSGETRIEBE
BOÎTES DE VITESSES AUXILIAIRES

(30) Priority: 31.03.2017 US 201715476319
(43) Date of publication of application: 03.10.2018
(73) Proprietor: Hamilton Sundstrand Corporation, Charlotte, NC 28217 (US)
(72) Inventor: VEILLEUX, Jr., Leo J., Wethersfield, CT 06109 (US); RIBAROV, Lubomir A., West Hartford, CT 06107 (US)
(74) Representative: Dehns

(56) References cited:
- GB-A- 2 197 392
- US-A- 5 694 765
- US-A1- 2007 173 365
- US-A1- 2010 024 434

## Description

### BACKGROUND OF THE INVENTION

### 1. Field of the Invention

The present disclosure relates to power transmission, and more particular to mechanical power transmission between gas turbines and gas turbine engine accessories.

### 2. Description of Related Art

Gas turbine engines, such as in aircraft, commonly employ gearboxes to transfer a portion of the rotating energy generated by the engine core to various accessory loads coupled to the engine through the gearbox. The loads impose drag on the engine core, which requires that the engine operate with sufficient margin to overcome the drag. Examples of accessory loads requiring mechanical power include fuel pumps, fuel flow governors, hydraulic pumps, oil pumps, pneumatic valves, engine actuators, tachometers, generators, etc.

Since the engine core typically rotates faster than accessories powered by the core, the gearbox transferring the mechanical power generally employs reduction gearing. The reduction gearing receives high speed rotation from the core, reduces the rotational speed to speed suitable for engine accessories and communicates the mechanical power as rotation to the accessories. The size of the reduction gearing generally increases with rotational speed mismatch of the core and accessory loads, greater mismatches requiring larger reduction gearing and/or limiting rotational speed of the engine core.

Such conventional methods and systems have generally been considered satisfactory for their intended purpose. However, there is still a need in the art for improved accessory gearboxes, gas turbine engines and methods communicating rotational energy between gas turbine engines and gas turbine engine accessories. The present disclosure provides a solution for this need.

Gearboxes are taught in US 5,694,765, US 2010/024424, US 2007/173365 and GB 2197392.

### SUMMARY OF THE INVENTION

An accessory gearbox for a gas turbine engine is provided as defined in claim 1.

In certain embodiments a fuel pump can be connected to the first differential. The pump motor can be operatively coupled to the fuel pump through the first differential. An oil pump can be coupled to the first differential. The first input and the second input can be operatively coupled to the oil pump through the first differential. The first differential can include first and second spider gears. The spider gears can be coaxial with a pump motor shaft and arranged along an axis coaxial with the first input and orthogonal to the second input.

In accordance with certain embodiments, the accessory gearbox can include a second differential. The second differential can be connected to the second input. The second input can include a coupling arranged for selective connection of the accessory gear train to a gas turbine engine high speed spool. The coupling can include a clutch, a brake, or a clutch and brake arrangement. The second differential can couple the second input to the accessory gear train. A generator can be connected to the second differential. The generator can be a starter/generator. The first input and the second input can be operably coupled by the second differential to the generator. The second differential can include first and second spider gears. The spider gears can be coaxial with the second input and arranged along an axis orthogonal to the first input.

It is contemplated that an auxiliary oil pump and a hydraulic pump can be connected to the accessory gear train. The first and second inputs can be operably coupled to the auxiliary oil pump and the hydraulic pump through the accessory gear train. The first differential can communicate rotational energy to the hydraulic pump and the auxiliary oil pump from a gas turbine engine low speed spool. The second differential can communicate rotational energy to the hydraulic pump and the auxiliary oil pump from a gas turbine engine high speed spool.

It is also contemplated that, in accordance with the present invention, the accessory gearbox includes a pump differential. The pump differential is coupled to a pump motor by the first differential. An oil pump tune motor is connected to the pump differential and operatively coupled therethrough to the oil pump. The pump differential includes first and second spider gears. The spider gears can be coaxial with an oil pump shaft and arranged along an axis orthogonal relative to the first input and parallel relative to the second input.

A gas turbine engine includes an accessory gearbox as described above with a first differential and a second differential. The first differential is connected to the first input and couples therethrough the first input to the accessory gear train. The second differential is connected to second input and couples therethrough the second input to the accessory gear train. A high speed spool is coupled to the first differential by the first input, a low speed spool coupled to the second differential by the second input, and the first and second differentials are arranged to combine rotational energy received spools for powering one or more accessories mounted to the accessory gearbox.

A method of communicating rotational energy between a gas turbine engine and one or more gas turbine engine accessories is provided in claim 10.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an exemplary embodiment of an accessory gearbox constructed in accordance with the present disclosure, showing high speed and low speed spools of a gas turbine engine operably connected to an engine accessory through a first and second inputs of the accessory gearbox;
Fig. 2 is a schematic view of an embodiment, not falling under the claimed subject matter, of the accessory gearbox of Fig. 1, showing the first and second inputs of the accessory gearbox being coupled to the engine accessory through first and second differentials and the accessory gear train of the accessory gearbox;
Fig. 3 is a schematic view of another embodiment, according to the claimed invention, of the accessory gearbox of Fig. 1, showing the first and second inputs coupled to an oil pump by first and second differentials and a pump differential connected to the first differential; and
Fig. 4 is a diagram of a method of communicating rotational energy between first and second inputs and accessories connected to the accessory gearbox, showing steps of the method.

### DETAILED DESCRIPTION OF THE PREFERRED EMBODIMENTS

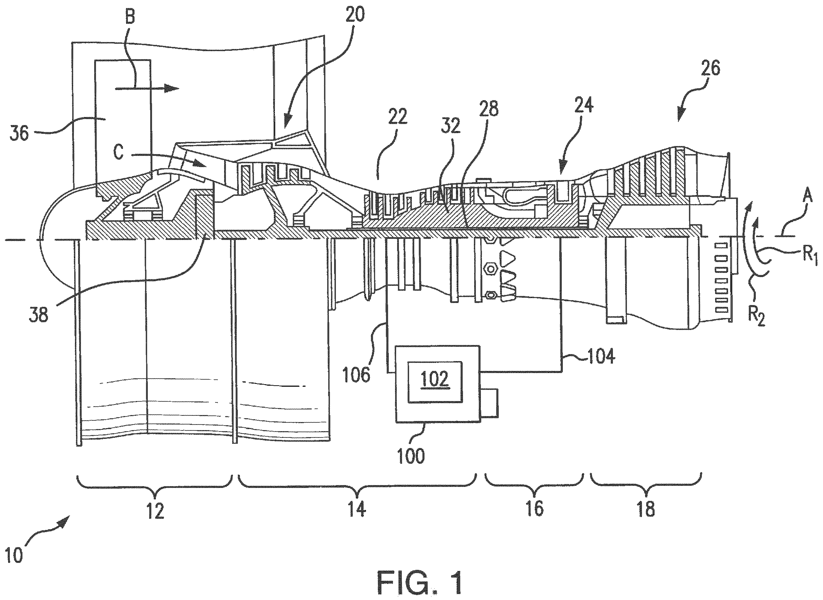

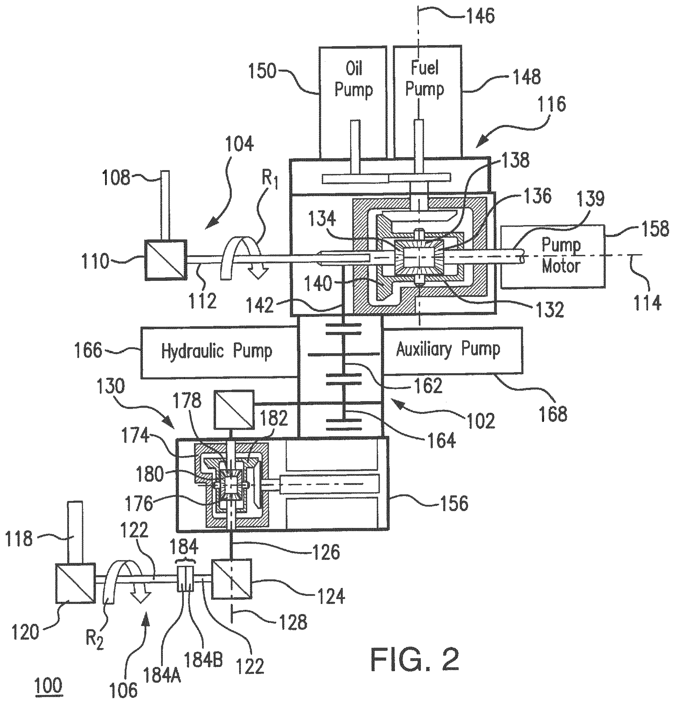

Reference will now be made to the drawings wherein like reference numerals identify similar structural features or aspects of the subject disclosure. For purposes of explanation and illustration, and not limitation, a partial view of an exemplary embodiment of an accessory gearbox in accordance with the disclosure is shown in Fig. 1 and is designated generally by reference character 100. Other embodiments of accessory gearboxes, gas turbine engines, and methods of communicating rotational energy between gas turbine engines and engine accessories in accordance with the disclosure, or aspects thereof, are provided in Figs. 2-4, as will be described. The systems and methods described herein can be used in gas turbine engines, such as geared turbofan engines, though the present disclosure is not limited to geared turbofan engines or to turbofan engines in general.

With reference to Fig. 1, a gas turbine engine 10 is shown. Gas turbine engine 10 includes a fan section 12, a compressor section 14, a combustor section 16, a turbine section 18, and accessory gearbox 100 with an engine accessory mounted thereto. Fan section 12 drives air along a bypass flow path B in a bypass duct defined within fan section 12. Compressor section 14 drives air along a core flow path C for compression and communication therethrough to combustor section 16 and turbine section 18.

Compressor section 14 includes a low pressure compressor 20 and a high pressure compressor 22 arranged along a rotation axis A. Turbine section 18 includes a high pressure turbine 24 and a low pressure turbine 26 arranged along rotation axis A. Low pressure compressor 20 and low pressure turbine 26 are connected to one another as a low speed spool 28, and rotate in concert with one another about rotation axis A. High pressure compressor 22 and high pressure turbine 24 are connected to one another as a high speed spool 32, and rotate in concert with one another about rotation axis A. It is contemplated that low speed spool 28 and high speed spool 32 rotate at different rotational speeds about rotation axis A, e.g., at a high speed spool rotational speed R₂ that is greater than a low speed rotational speed R₁, as appropriate for a given operating regime of gas turbine engine 10.

Low pressure compressor 20 is arranged axially downstream of fan section 12 and receives therefrom air from the ambient environment. Low pressure compressor 20 compresses the air received from fan section 12 and provides the compressed air to high pressure compressor 22. High pressure compressor 22 further compresses the air received from low pressure compressor 20 and communicates the compressed air to combustor section 16. Combustor section 16 generates high pressure combustion products using an ignited mixture of compressed and injected high-pressure atomized fuel, and communicates the combustion products to turbine section 18.

Turbine section 18 expands the high pressure combustion products received from combustor section 16, extracts work therefrom, and applies the extracted work to high speed spool 32 and low speed spool 28 as rotational energy. Low speed spool 28 and high speed spool 32 use the their respective rotational energies to drive low pressure compressor 20, high pressure compressor 22 respectively, and one or more accessories mounted to accessory gearbox 100 coupled to low speed spool 28 and high speed spool 32 therethrough. Although depicted as a two-spool geared turbofan gas turbine engine 10 having a fan 36 arranged to receive mechanical rotation through a fan gearbox 38 in the disclosed non-limiting embodiment, it should be understood that the concepts described herein are not limited to use with two-spool turbofans as the teachings may be applied to other types of turbofan engines.

As will be appreciated by those of skill in the art, rotational energy supplied by gas turbine engines to engine accessories is typically provided by a takeoff shaft driven by the high speed spool, generally through intervening reduction gearing. While generally satisfactory for its intended purpose, it can sometimes be undesirable to power engine accessories from the high speed spool. For example, in geared engine architectures where the majority of the engine thrust is generated using a slowly rotating fan, powering accessories using the high speed spool can require that the high speed spool be larger than otherwise necessary and/or be rotated at a slower speed than otherwise required for efficient engine operation. This is because drag (or load) associated with engine accessories like generators has grown with the advent of more-electric aircraft architectures while gas turbine engines increasingly employ smaller cores that run at higher rotational speeds for engine thermodynamic efficiency purposes.

To reconcile these competing trends gas turbine engine 10 includes a dual-input accessory gearbox 100. Accessory gearbox 100 includes an accessory gear train 102, a first input 104, and a second input 106. First input 104 couples low speed spool 28 to accessory gear train 102 for communicating rotational energy between low speed spool 28 and accessory gear train 102. Second input 106 couples high speed spool 32 to accessory gear train 102 for communicating rotational energy between high speed spool 32 and accessory gear train 102. Accessory gear train 102 couples first input 104 with second input 106 for communicating rotational energy between either or both low speed spool 28 and high speed spool 32 and accessories coupled to thereto by accessory gear train 102.

Referring to Fig. 2, accessory gearbox 100 is shown. First input 104 includes a radial drive shaft 108, a bevel gear set 110, and a lay shaft 112 for communicating rotational energy R₁ between low speed spool 28 (shown in Fig. 1) and accessory gear train 102. Radial drive shaft 108 is connected between low speed spool 26 and bevel gear set 110. Lay shaft 112 is connected between bevel gear set 110 and accessory gearbox 100, and is received in a first differential 116 of accessory gearbox 100 along a first input axis 114.

Second input 106 includes a radial drive shaft 118, bevel gear set 120, an intermediate shaft 122, bevel gear set 124, and a lay shaft 126 for communicating rotational energy R₂ between high speed spool 32 (shown in Fig. 1) and accessory gearbox 100. Radial drive shaft 118 is connected between high speed spool 32 and bevel gear set 120. Intermediate shaft 122 is connected between bevel gear set 120 and bevel gear set 124. Lay shaft 126 is connected between bevel gear set 124 and accessory gearbox 100 and is received within a second differential 130 of accessory gearbox 100 along a second input axis 128. Second input axis 128 is orthogonal relative to first input axis 114.

First differential 116 has a carrier 132, a first spider gear 134, a second spider gear 136, a side gear 138, a ring gear 140, and an accessory gear 142. Carrier 132 is supported for rotation relative to accessory gearbox 100. First spider gear 134 is fixed relative to lay shaft 112, is coaxial with a pump motor shaft 139, and is supported for rotation relative to carrier 132 first input axis 114. Second spider gear 136 is fixed relative to a pump motor shaft 139, is supported for rotation relative to carrier 132, and is coupled to first spider gear 134 by intermeshed side gear 138. Side gear 138 is supported for rotation within carrier 132 about a side gear axis 146, which is orthogonal relative to first input axis 114, and intermeshes with first spider gear 134 and second spider gear 136. Ring gear 140 is fixed relative to carrier 132 and is operably connected to a fuel pump 148 and an oil pump 150. In the illustrated exemplary embodiment rotational energy is communicated from first differential 116 to oil pump 150 through fuel pump 148 via intermeshed pinion gears coupled to respective shafts of fuel pump 148 and oil pump 150.

Accessory gear 142 is fixed in rotation relative to lay shaft 112 and intermeshes with accessory gear train 102. In the illustrated exemplary embodiments accessory gear train 102 includes a first gear 162 and a second gear 164, first gear 162 intermeshing with accessory gear 142 and second gear 164 being coupled to second differential 130. An auxiliary pump 168 and a hydraulic pump 166 are each connected to first gear 162, first differential 116 and second differential 130 being operatively coupled to auxiliary pump 168 and hydraulic pump 166 through first gear 162 to provide rotational energy thereto.

Second differential 130 is similar to first differential 116 with the difference that it is clocked 90 degrees relative to first differential 116, and includes a carrier 174, a first spider gear 176, a second spider gear 178, a side gear 180, and a ring gear 182. Carrier 174 is supported for rotation relative to accessory gearbox 100. First spider gear 176 is fixed relative to second lay shaft 126 and is supported for rotation relative to carrier 174. Second spider gear 178 is coaxial with lay shaft 126, is supported for rotation relative to carrier 174, and is coupled to accessory gear train 102 by an intermediate bevel gear set and shafting. Side gear 180 is supported for rotation within carrier 174 and about a side gear axis, which is orthogonal relative to lay shaft 126, and intermeshes with first spider gear 176 and second spider gear 178. Ring gear 182 is fixed relative to carrier 174 and is operatively coupled to a generator 156, which is mounted to second differential 130. Generator 156 can be, by way of non-limiting example, a starter/generator arranged to provide and receive rotational energy through accessory gearbox 100.

It is contemplated that a pump motor 158 mount to first differential 116 at pump motor shaft 139. Pump motor 158 is operably coupled to fuel pump 148 and oil pump 150 through first differential 116 to provide rotational energy to fuel pump 148 and oil pump 150 in additional to that provided by low speed spool 28 and high speed spool 32. This allows for providing increased oil and/or fuel flow using fuel pump 148 and oil pump 150, such was when increased cooling is required for hot engine components and/or generator 156, and is otherwise not readily available from low speed spool 28 (shown in Fig. 1) and high speed spool 32 (shown in Fig. 1).

In certain embodiments second input 106 can include a coupling 184 for selective connection of accessory gearbox 100 with high speed spool 32 and/or braking. For example, coupling 184 can include a disconnect 184A, which be a clutch-type device. Coupling 184 can include a brake 184B. Alternatively or additionally, coupling 184 can include both disconnect and a brake. Coupling 184 can be hydraulic, electro-magnetic, or any other kind of coupling as suitable for an intended application. It is contemplated that coupling 184 can be operatively connected to an engine control arrangement (not show for clarity reasons), such as Electronic Engine Control (EEC) and Full Authority Digital Engine Control (FADEC). In the illustrated exemplary embodiment, coupling 184 is arranged along intermediate shaft 122 for selective connecting and disconnect accessory gearbox 100 from radial drive shaft 118, and therethrough from high speed spool 32 (shown in Fig. 1).

For example, when input rotational energy is required to start gas turbine engine 10 (shown in Fig. 1) for starting, coupling 184 can be arranged to connect generator 156 through second input 106 to high speed spool 32 (shown in Fig. 1) of gas turbine engine 10. Connection of generator 156 through coupling 184 allows generator 156 to communicate rotational energy to high speed spool 32 to enable gas turbine engine 10 to start. In certain embodiments the rotational resistance presented to generator 156 through second differential second spider gear 178 is such that substantially all rotational energy provided by generator 156 flows to high speed spool 32, the accessory load effectively rotational fixing second spider gear 180 relative to first spider gear 176 such that the rotational energy flows through second input 106.

Once gas turbine engine 10 (shown in Fig. 1) has been accelerated to its minimal ground idle rotational speed, coupling 184 is actuated to disconnect second input 106 from accessory gearbox 100, ceasing application of rotational energy through second input 106 for starting gas turbine engine 10. Disconnecting second input 106 from gas turbine engine 10 once ground ide rotational speed is reached reduces losses that could otherwise be realized through continuous connection (and hence, power take-off) of accessory gearbox 100 with high speed spool 32 (shown in Fig. 1). Disconnecting second input 106 from gas turbine engine 10 once ground idle rotational speed also allows high speed spool 32 to reach a higher rotational speed, e.g., a thermally more optimal rotational speed, once free of the mechanical load exerted by accessory gearbox 100 through second input 106.

In certain embodiments, this reduces parasitic losses, allows high speed spool 32 to reach higher rotational speeds, and increases the overall pressure ratio gas turbine engine 10 to further improve overall thermodynamic efficiency of gas turbine engine 10. As will be appreciated by those of skill in the art in view of the present disclosure, coupling 184 can be actuated to reconnect accessory gearbox 100 to high speed spool 32 after landing of the aircraft in preparation of the next engine start. As will also be appreciated by those of skill in the art in view of the present disclosure, coupling 184 can additionally provide the capability the connect/disconnect accessory gearbox 100 for maintenance operations, such as ground inspections, maintenance, compressor washing, etc. In addition, coupling 184 further provides the capability to connect or disconnect accessory gearbox 100 during flight, simplifying in-flight engine re-start in the unlikely event that gas turbine engine 10 becomes inoperable.

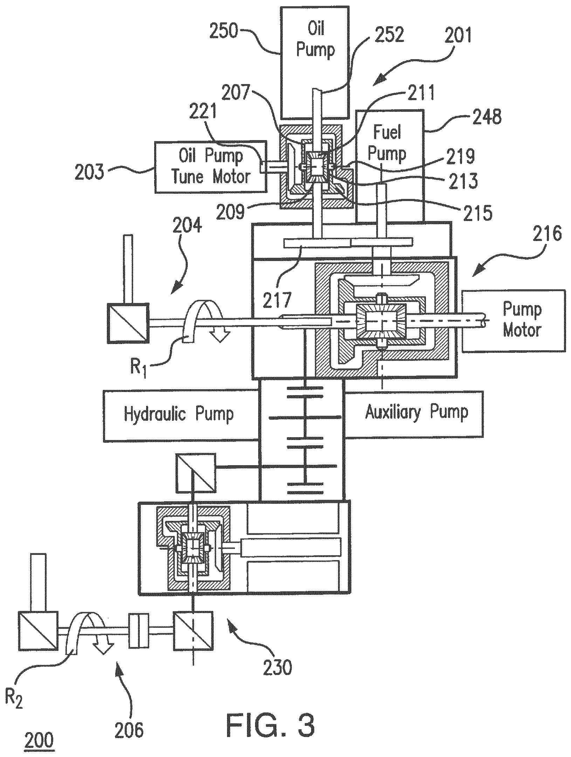

With reference to Fig. 3, an accessory gearbox 200 is shown. Accessory gearbox 200 is similar to accessory gearbox 100 (shown in Fig. 2) and additionally includes a pump differential 201 and an oil pump tune motor 203. Pump differential 201 is similar to first differential 116 (shown in Fig. 2) and is additionally clocked differently that first differential 116 and second differential 130 (shown in Fig. 2). As shown in Fig. 3, pump differential clocked 90 degrees relative to a first differential 216 and is clocked 180 degrees relative to second differential 230. It is contemplated that pump differential 201 be a relatively small differential, e.g., less massive than first differential 216 and second differential 230.

An oil pump tune motor 203 is coupled to an oil pump 250 through pump differential 201. This allows for operating oil pump 250 with rotational energy provided by oil pump tune motor 250 to supplement rotational energy provided by first input 204 and/or second input 206 through first differential 216 and second differential 230. It is also contemplated that oil pump tune motor 203 provide rotational energy to oil pump 250 when rotational energy is unavailable from first input 204 and/or second input 206, such as during engine starting. As will be appreciated by those of skill in art in view of the present disclosure, oil pump tune motor 203 can be arranged to preferentially communicate rotational energy provided by oil pump motor 203 to oil pump 250 by sizing the intervening elements such that more resistance is seen at pinion gear 217 than at oil pump 250.

Pump differential 201 has a carrier 207, a first spider gear 209, a second spider gear 211, a side gear 213, a ring gear 215, and pinion gear 217, which can be a bull gear. Carrier 207 is supported for rotation relative to accessory gearbox 200. First spider gear 209 is fixed relative to pinion gear 217 and is supported for rotation relative to carrier 207. Second spider gear 211 is fixed relative to oil pump shaft 252, is coaxial with a first spider gear 209, and is supported for rotation relative to carrier 207. Side gear 213 is supported for rotation within carrier 207 about a side gear axis 219, which is orthogonal relative to oil pump shaft 252, and intermeshes with first spider gear 209 and second spider gear 211. Ring gear 215 is coupled to an oil pump tune motor shaft 221, oil pump tune motor 203 being operatively connected to oil pump 250 through ring gear 215 and pump differential 201 for providing supplemental rotational energy to oil pump 250.

For engine starting, when the engine core is not yet rotating, there can be a need to provide pressurized fuel and oil for initial engine operation up to ground idle conditions. Accessory gearbox 200 is configured to provide pressurized oil using oil pump 250 and fuel pump 248 using oil pump tune motor 203. For example, oil pump tune motor 203 can provide rotational energy to oil pump 250 such that pressurized oil is provided to gas turbine engine 10 (shown in Fig. 1) during engine start-up. As will be appreciated by those of skill in the art, pressurizing lubricant during startup simplifies starting as it reduces resistance to rotation of high speed spool 32 (shown in Fig. 1), allowing a smaller starter to be employed for rotating high speed spool 32 up to the ground idle minimum rotational speed.

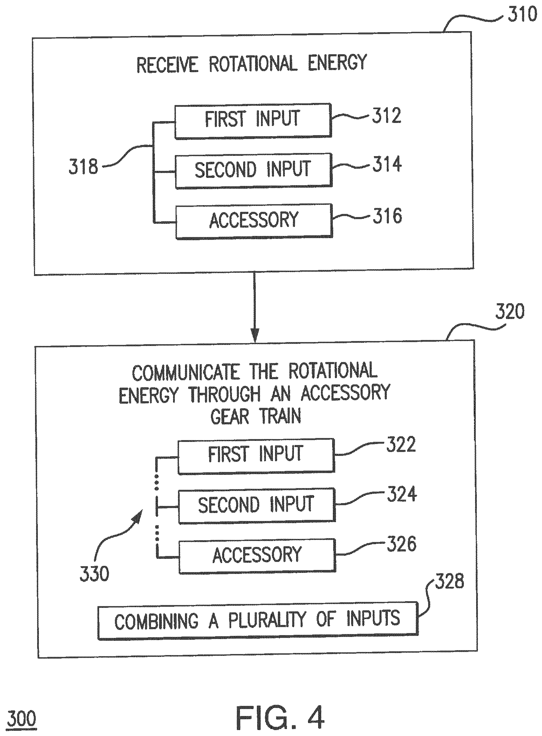

With reference to Fig. 4, a method 300 of communicating rotational energy between a gas turbine engine, e.g., gas turbine engine 10 (shown in Fig. 1), and a gas turbine engine accessory, e.g., generator 156 (shown in Fig. 2), is shown. Method 300 includes receiving rotational energy at an accessory gearbox, e.g., accessory gearbox 100 (shown in Fig. 1), as shown with box 310. It is contemplated that the rotational energy can be received from a plurality of sources.

In certain embodiments the rotational energy can be received from dual inputs. For example, rotational energy can be received from a first input, e.g., first input 104 (shown in Fig. 2), as shown with box 312. In accordance with certain embodiments, rotational energy can be received from the second input, e.g., second input 106 (shown in Fig. 2), as shown with box 314. Rotational energy can be received from the accessory, e.g., pump motor 158 (shown in Fig. 2), generator 156 (shown in Fig. 2), and/or an oil pump tube motor 203 (shown in Fig. 3), as shown with box 316. The rotational can be received from two or more of the first input, second input and accessory such as from a low speed spool, e.g., low speed spool 28 (shown in Fig. 2), and a high speed spool, e.g., high speed spool 32 (shown in Fig. 2), as shown with bracket 318.

The rotational energy can be communicated through an accessory gear train, e.g. accessory gear train 102 (shown in Fig. 2), as shown with box 320. The rotational energy can be communicated to the first input and/or the second input, as shown with box 322 and 324. The rotational energy can be communicated to an engine accessory, as shown with box 326. Rotational energy from two or more of the first input and the second input can be combined by the accessory gearbox and thereafter provided to the engine accessory, as shown with box 328. Rotational energy can be selectively communicated through the accessory gearbox, as shown with bracket 330. For example, rotational energy from the generator can be applied to the second input only, such as during engine startup. The drag from the accessories on the differentials coupled to first input allow the second input to spin as a result of the applied torque from the starter/generator. During the windmill engine re-light the spinning of the first input can add additional energy to the starter input thus allowing engine to re-start. Rotational energy from both the first and second inputs can be applied to the engine accessories. Rotation either the first input or the second input can be applied to the engine accessories.

In embodiments described herein, accessory gearboxes have a first input to provide rotational energy for powering accessories mounted to the accessory gearbox. The first input can connect the engine low speed spool to the accessory gearbox, reducing the load carried by the high speed spool connected to the accessory gearbox by a second input owing to the rotational power available from the low speed spool. This enables powering engine accessories like generators with the low speed spool with rotational energy from the low speed spool during operating situations when the generator requires rotational energy in excess of that available from the high speed spool.

For example, during descent, rotational energy available from the high speed spool may be insufficient for the generator to meet the electrical power required to actuate flight control surfaces, deploy spoilers, extend the aircraft landing gear, and deploy the engine thrust reversers subsequent to touch down. Coupling the generator to the engine low speed spool through accessory gearbox via first and second differentials and first input can provide the rotational energy necessary to meet these electrical power requirements using the engine low speed spool. It can also reduce the drag exerted on the engine high speed spool by the generator, enabling engine architectures with relatively small high speed spools and/or spools which rotate at relatively high rotational speeds as well as more electric aircraft architectures requiring greater amounts of electrical power generating capability.

In certain embodiments, accessory gearboxes described herein enable the pump motor mounted to the accessory gearbox through the first differential to provide rotational power to the fuel pump and oil pump during engine start. Rotational power can also be provided to the fuel pump and oil pump from the pump motor to the fuel pump and oil pump during transient flight regimes, such as the beginning of descent, where the rotational speed of high speed spool is relatively low due to reduced engine thrust requirements during descent. It is contemplated that the pump motor can configured to provide a subtractive speed bias to reduce pump speed during cruise at altitude to reduce unnecessary flow and pressure output as well as waste heat created by the oil pump and/or fuel pump, thereby reducing the need to dissipate heat through the engine heat exchanger(s) or to communicate waste heat into engine lubricant or fuel flows.

In accordance with certain embodiments, accessory gearboxes described herein can include a relatively small pump differential. The pump differential can have a bull gear intermeshed with the fuel pump input shaft and therethrough coupled to the accessory gearbox second differential. The oil pump can mount to the accessory gearbox at the pump differential, the pump differential providing rotational energy to the oil pump at a differential speed input.

It is also contemplated that a relatively small/lightweight electric tune motor can be mounted to the accessory gearbox at the pump differential. The tune motor can provide a more accurate oil pump speed control which can adjusted, i.e. tuned, independent of rotational speeds of the low speed spool and high speed spool of the engine. Independent speed adjustment capability provided by the tune motor allows the oil pump speed to be increased or decreased as appropriate to improve oil flow and thermal management within the gas turbine engine, potentially reducing the size of the heat exchanger(s) employed by the engine oil and fuel systems and/or eliminating the variable oil reduction valve (VORV) and associated plumbing required in certain engine architectures.

The methods and systems of the present disclosure, as described above and shown in the drawings, provide for accessory gearboxes with superior properties including reduced power extraction from the gas turbine engine high speed spool by sharing generator load between independent connections to the engine high speed and low speed spools, thereby allowing size reduction and/or increased high speed spool rotational speed. While the apparatus and methods of the subject disclosure have been shown and described with reference to preferred embodiments, those skilled in the art will readily appreciate that change and/or modifications may be made thereto without departing from the scope of the subject disclosure as defined by the appended claims.

## Claims

1. An accessory gearbox for a gas turbine engine, comprising:
an accessory gear train;
a first input (204) coupled to the accessory gear train;
a second input (206) coupled to the accessory gear train, wherein the accessory gear train operably couples the first input and the second input for communicating rotational energy between an accessory mounted to the accessory gearbox and the first and second inputs;
a first differential (216) connected to the first input and coupling the first input to the accessory gear train;
a pump motor;
a pump differential (201) coupled to the pump motor by the first differential;
an oil pump (250) having an oil pump shaft (252); and
an oil pump tune motor (203) connected to the pump differential and operatively coupled therethrough to the oil pump;
wherein the pump differential includes first (209) and second (211) spider gears arranged along the oil pump shaft, the oil pump shaft being supported for rotation along an axis orthogonal to the first input and parallel to the second input.

2. The accessory gearbox as recited in claim 1, further comprising a fuel pump (248) connected to the first differential, wherein the pump motor is operatively coupled to the fuel pump through the first differential.

3. The accessory gearbox as recited in claim 1 or 2, whereby the oil pump (250) is connected to the first differential and coupled therethrough to the first input and the second input.

4. The accessory gearbox as recited in any preceding claim, wherein the pump motor has a pump motor shaft and wherein the first differential includes first and second spider gears coaxial with the pump motor shaft, the pump motor shaft being coaxial with the first input and orthogonal to the second input.

5. The accessory gearbox as recited in any preceding claim, further comprising a second differential (230) connected to second input and coupled therethrough to the accessory gear train,
and preferably wherein the second differential includes first and second spider gears coaxial with the second input and orthogonal relative to the first input.

6. The accessory gearbox as recited in claim 5, further comprising a generator connected to the second differential, the first input and the second input being operably coupled through the second differential to the generator.

7. The accessory gearbox as recited in any preceding claim, further comprising an auxiliary oil pump and a hydraulic pump connected to the accessory gear train, the first input and the second input being operably coupled to the auxiliary oil pump and the hydraulic pump through the accessory gear train.

8. The accessory gearbox as recited in claim 7, the first differential connecting the first input and the accessory gear train and being configured to communicate rotational energy to the hydraulic pump and the auxiliary oil pump from a gas turbine engine low speed spool, or further comprising a second differential connecting the second input and the accessory gear train configured to communicate rotational energy to the hydraulic pump and the auxiliary oil pump from a gas turbine engine high speed spool.

9. A gas turbine engine, comprising:
an accessory gearbox (200) as recited in any preceding claim, the accessory gearbox comprising the first differential connected to the first input and coupling therethrough the first input to the accessory gear train, and a second differential connected to second input and coupling therethrough the second input to the accessory gear train;
a low speed spool (28) coupled to the first differential by the first input; and
a high speed spool (32) coupled to the second differential by the second input, the first and second differential configured to combine rotational energy received therethrough for powering one or more accessories mounted to the accessory gearbox.

10. A method of communicating rotational energy between a gas turbine engine and one or more gas turbine engine accessories, comprising:
receiving rotational energy at an accessory gearbox according to claims 1-8; and
selectively communicating the rotational energy through an accessory gear train to one or more of the first input, the second input and the engine accessory
wherein receiving rotational energy comprises receiving rotational energy from the first input and the second input, wherein selectively communicating the rotational energy comprises selectively communicating the rotational energy to the engine accessory, or wherein receiving rotational energy comprises receiving rotational energy from the engine accessory, wherein selectively communicating the rotational energy comprises selectively communicating the rotational energy to the second input, or wherein receiving rotational energy comprises receiving rotational energy from the first input only, wherein selectively communicating the rotational energy comprises selectively communicating the rotational energy to engine accessory.

## Patentansprüche

1. Hilfsgetriebe für ein Gasturbinentriebwerk, umfassend:
einen Hilfsgetriebezug;
einen ersten Eingang (204), der an den Hilfsgetriebezug gekoppelt ist;
einen zweiten Eingang (206), der an den Hilfsgetriebezug gekoppelt ist, wobei der Hilfsgetriebezug den ersten Eingang und den zweiten Eingang wirkkoppelt, um Drehenergie zwischen einem Zubehör, das an dem Hilfsgetriebe montiert ist, und dem ersten und dem zweiten Eingang zu kommunizieren;
ein erstes Differential (216), das mit dem ersten Eingang verbunden ist und den ersten Eingang an den Hilfsgetriebezug koppelt;
einen Pumpenmotor;
ein Pumpendifferential (201), das durch das erste Differential an den Pumpenmotor gekoppelt ist;
eine Ölpumpe (250), die eine Ölpumpenwelle (252) aufweist; und
einen Ölpumpenabstimmungsmotor (203), der mit dem Pumpendifferential verbunden und dadurch an die Ölpumpe wirkgekoppelt ist;
wobei das Pumpendifferential ein erstes (209) und ein zweites (211) Spinnengetriebe beinhaltet, die entlang der Ölpumpenwelle angeordnet sind, wobei die Ölpumpenwelle zur Drehung entlang einer Achse orthogonal zu dem ersten Eingang und parallel zu dem zweiten Eingang gestützt wird.

2. Hilfsgetriebe nach Anspruch 1, ferner umfassend eine Kraftstoffpumpe (248), die mit dem ersten Differential verbunden ist, wobei der Pumpenmotor durch das erste Differential an die Kraftstoffpumpe wirkgekoppelt ist.

3. Hilfsgetriebe nach Anspruch 1 oder 2, wobei die Ölpumpe (250) mit dem ersten Differential verbunden und dadurch an den ersten Eingang und den zweiten Eingang gekoppelt ist.

4. Hilfsgetriebe nach einem vorhergehenden Anspruch, wobei der Pumpenmotor eine Pumpenmotorwelle aufweist und wobei das erste Differential ein erstes und ein zweites Spinnengetriebe koaxial mit der Pumpenmotorwelle beinhaltet, wobei die Pumpenmotorwelle koaxial mit dem ersten Eingang und orthogonal zu dem zweiten Eingang ist.

5. Hilfsgetriebe nach einem vorhergehenden Anspruch, ferner umfassend ein zweites Differential (230), das mit dem zweiten Eingang verbunden und dadurch an den Hilfsgetriebezug gekoppelt ist,
und wobei das zweite Differential bevorzugt ein erstes und ein zweites Spinnengetriebe koaxial mit dem zweiten Eingang und orthogonal relativ zu dem ersten Eingang beinhaltet.

6. Hilfsgetriebe nach Anspruch 5, ferner umfassend einen Generator, der mit dem zweiten Differential verbunden ist, wobei der erste Eingang und der zweite Eingang durch das zweite Differential an den Generator wirkgekoppelt sind.

7. Hilfsgetriebe nach einem vorhergehenden Anspruch, ferner umfassend eine Hilfsölpumpe und eine Hydraulikpumpe, die mit dem Hilfsgetriebezug verbunden ist, wobei der erste Eingang und der zweite Eingang durch den Hilfsgetriebezug an die Hilfsölpumpe und die Hydraulikpumpe wirkgekoppelt sind.

8. Hilfsgetriebe nach Anspruch 7, wobei das erste Differential den ersten Eingang und den Hilfsgetriebezug verbindet und konfiguriert ist, um Drehenergie an die Hydraulikpumpe und die Hilfsölpumpe von einer Niedergeschwindigkeitsspule eines Gasturbinentriebwerks zu kommunizieren, oder ferner umfassend ein zweites Differential, das den zweiten Eingang und den Hilfsgetriebezug verbindet und konfiguriert ist, um Drehenergie an die Hydraulikpumpe und die Hilfsölpumpe von einer Hochgeschwindigkeitsspule eines Gasturbinentriebwerks zu kommunizieren.

9. Gasturbinentriebwerk, umfassend:
ein Hilfsgetriebe (200) nach einem vorhergehenden Anspruch, wobei das Hilfsgetriebe das erste Differential, das mit dem ersten Eingang verbunden ist und dadurch den ersten Eingang an den Hilfsgetriebezug koppelt, und ein zweites Differential umfasst, das mit dem zweiten Eingang verbunden ist und dadurch den zweiten Eingang an den Hilfsgetriebezug koppelt;
eine Niedergeschwindigkeitsspule (28), die durch den ersten Eingang an das erste Differential gekoppelt ist; und
eine Hochgeschwindigkeitsspule (32), die durch den zweiten Eingang an das zweite Differential gekoppelt ist, wobei das erste und das zweite Differential konfiguriert sind, um Drehenergie zu kombinieren, die dadurch empfangen wird, um ein oder mehrere Zubehöre anzutreiben, die an dem Hilfsgetriebe montiert sind.

10. Verfahren zum Kommunizieren von Drehenergie zwischen einem Gasturbinentriebwerk und einem oder mehreren Gasturbinentriebwerkszubehören, umfassend:
Empfangen von Drehenergie an einem Hilfsgetriebe nach Anspruch 1-8; und
selektives Kommunizieren der Drehenergie durch einen Hilfsgetriebezug an eines oder mehrere von dem ersten Eingang, dem zweiten Eingang und dem Triebwerkszubehör,
wobei das Empfangen von Drehenergie das Empfangen von Drehenergie von dem ersten Eingang und dem zweiten Eingang umfasst, wobei das selektive Kommunizieren der Drehenergie das selektive Kommunizieren der Drehenergie an das Triebwerkszubehör umfasst, oder wobei das Empfangen von Drehenergie das Empfangen von Drehenergie von dem Triebwerkszubehör umfasst, wobei das selektive Kommunizieren der Drehenergie das selektive Kommunizieren der Drehenergie an den zweiten Eingang umfasst oder wobei das Empfangen von Drehenergie das Empfangen von Drehenergie nur von dem ersten Eingang umfasst, wobei das selektive Kommunizieren der Drehenergie das selektive Kommunizieren der Drehenergie an Triebwerkszubehör umfasst.

## Revendications

1. Boîte de vitesses auxiliaire d'un moteur à turbine à gaz, comprenant :
un train d'engrenages auxiliaire ;
une première entrée (204) couplée au train d'engrenages auxiliaire ;
une seconde entrée (206) couplée au train d'engrenages auxiliaire, dans laquelle le train d'engrenages auxiliaire couple de manière fonctionnelle la première entrée et la seconde entrée pour communiquer l'énergie de rotation entre un accessoire monté sur la boîte de vitesses auxiliaire et les première et seconde entrées ;
un premier différentiel (216) relié à la première entrée et couplant la première entrée au train d'engrenages auxiliaire ;
un moteur de pompe ;
un différentiel de pompe (201) couplé au moteur de pompe par le premier différentiel ;
une pompe à huile (250) ayant un arbre de pompe à huile (252) ; et
un moteur de réglage de pompe à huile (203) relié au différentiel de pompe et couplé de manière fonctionnelle à travers celui-ci à la pompe à huile ;
dans laquelle le différentiel de pompe comprend des premier (209) et second (211) engrenages satellites agencés le long de l'arbre de pompe à huile, l'arbre de pompe à huile étant supporté pour tourner le long d'un axe perpendiculaire à la première entrée et parallèle à la seconde entrée.

2. Boîte de vitesses auxiliaire selon la revendication 1, comprenant en outre une pompe à carburant (248) reliée au premier différentiel, dans laquelle le moteur de pompe est couplé de manière fonctionnelle à la pompe à carburant à travers le premier différentiel.

3. Boîte de vitesses auxiliaire selon la revendication 1 ou 2, moyennant quoi la pompe à huile (250) est reliée au premier différentiel et couplée à travers celui-ci à la première entrée et à la seconde entrée.

4. Boîte de vitesses auxiliaire selon une quelconque revendication précédente, dans laquelle le moteur de pompe a un arbre de moteur de pompe et dans laquelle le premier différentiel comprend des premier et second engrenages satellites coaxiaux avec l'arbre de moteur de pompe, l'arbre de moteur de pompe étant coaxial avec la première entrée et perpendiculaire à la seconde entrée.

5. Boîte de vitesses auxiliaire selon une quelconque revendication précédente, comprenant en outre un second différentiel (230) relié à la seconde entrée et couplé à travers celle-ci au train d'engrenages auxiliaire, et de préférence dans laquelle le second différentiel comprend des premier et second engrenages satellites coaxiaux avec la seconde entrée et perpendiculaires par rapport à la première entrée.

6. Boîte de vitesses auxiliaire selon la revendication 5, comprenant en outre un générateur relié au second différentiel, la première entrée et la seconde entrée étant couplées de manière fonctionnelle à travers le second différentiel au générateur.

7. Boîte de vitesses auxiliaire selon une quelconque revendication précédente, comprenant en outre une pompe à huile auxiliaire et une pompe hydraulique reliée au train d'engrenages auxiliaire, la première entrée et la seconde entrée étant couplées de manière fonctionnelle à la pompe à huile auxiliaire et à la pompe hydraulique à travers le train d'engrenages auxiliaire.

8. Boîte de vitesses auxiliaire selon la revendication 7, le premier différentiel reliant la première entrée et le train d'engrenages auxiliaire et étant conçu pour communiquer une énergie de rotation à la pompe hydraulique et à la pompe à huile auxiliaire depuis une bobine basse vitesse de moteur à turbine à gaz, ou comprenant en outre un second différentiel reliant la seconde entrée et le train d'engrenages auxiliaire conçu pour communiquer une énergie de rotation à la pompe hydraulique et à la pompe à huile auxiliaire depuis une bobine haute vitesse de moteur à turbine à gaz.

9. Moteur à turbine à gaz, comprenant :
une boîte de vitesses auxiliaire (200) selon une quelconque revendication précédente, la boîte de vitesses auxiliaire comprenant le premier différentiel relié à la première entrée et couplant à travers celui-ci la première entrée au train d'engrenages auxiliaire, et un second différentiel relié à une seconde entrée et couplant à travers celui-ci la seconde entrée au train d'engrenages auxiliaire ;
une bobine basse vitesse (28) couplée au premier différentiel par la première entrée ; et
une bobine haute vitesse (32) couplée au second différentiel par la seconde entrée, le premier et le second différentiel étant conçus pour combiner l'énergie de rotation reçue à travers celle-ci pour alimenter un ou plusieurs accessoires montés sur la boîte de vitesses auxiliaire.

10. Procédé de communication d'énergie de rotation entre un moteur à turbine à gaz et un ou plusieurs accessoires de moteur à turbine à gaz, comprenant :
la réception d'énergie de rotation au niveau d'une boîte de vitesses auxiliaire selon les revendications 1 à 8 ; et
la communication sélective de l'énergie de rotation à travers un train d'engrenages auxiliaire à un ou plusieurs de la première entrée, de la seconde entrée et de l'accessoire moteur
dans lequel la réception d'énergie de rotation comprend la réception d'énergie de rotation depuis la première entrée et la seconde entrée, dans lequel la communication sélective de l'énergie de rotation comprend la communication sélective de l'énergie de rotation à l'accessoire moteur, ou dans lequel la réception d'énergie de rotation comprend la réception d'énergie de rotation depuis l'accessoire moteur, dans lequel la communication sélective de l'énergie de rotation comprend la communication sélective de l'énergie de rotation à la seconde entrée, ou dans lequel la réception de l'énergie de rotation comprend la réception de l'énergie de rotation uniquement depuis la première entrée uniquement, dans lequel la communication sélective de l'énergie de rotation comprend la communication sélective de l'énergie de rotation à l'accessoire moteur.
